# EUROPEAN PATENT SPECIFICATION

(11) **EP 0 475 763 B1**
(45) Date of publication and mention of the grant of the patent: **21.08.1996**
(21) Application number: 91308343.2
(22) Date of filing: 12.09.1991
(51) Int. Cl.: H01J 29/86, H01J 9/24, C03C 21/00

(54) **Glass front-panel for a cathode ray tube and production method of the same**
Glasfrontplatte für Kathodenstrahlröhre und Herstellungsverfahren
Panneau frontal en verre pour tube à rayons cathodiques et procédé de production de celui-ci.

(30) Priority: 13.09.1990 JP 243425/90
(43) Date of publication of application: 18.03.1992
(60) Divisional application: 95100535.4
(73) Proprietor: NIPPON SHEET GLASS CO., LTD., Chuo-ku Osaka (JP)
(72) Inventor: Shibaoka, Kazuo, Chuo-ku, Osaka (JP); Suzuki, Kouichi, Chuo-ku, Osaka (JP); Akimoto, Toshio, Chuo-ku, Osaka (JP)
(74) Representative: Jackson, David Spence

(56) References cited:
- DE-A- 2 714 423
- GB-A- 1 513 809
- GB-A- 2 200 627
- PATENT ABSTRACTS OF JAPAN, vol. 6, no. 170 (E-128)(1048), 3rd September 1982 & JP-A-57 88 641
- PATENT ABSTRACTS OF JAPAN, vol. 1, no. 66 (E-77), 27th June 1977 & JP-A-52 06 076

## Description

### Field of the Invention

This invention relates generally to a cathode ray tube for an electronic display, on which a pictorial image is produced, and more particularly is directed to a glass front-panel for a cathode ray tube, which is available for a thin image-display apparatus.

### Description of the Related Art

As a thin image-display apparatus, an apparatus displaying an image by means of a matrix drive system is known, for example, as disclosed in Journal of the Society of Television Engineers, Vol. 40, No. 10.1024 (1986). A glass front-panel for a cathode ray tube available for an image display apparatus comprises an image displaying portion with a flat surface, a side wall portion contiguous to the image displaying portion, and a flange portion crookedly contiguous to the side wall portion, for example, as disclosed in Japanese Laid-open Patent Publication No. 62-153148. The glass front-panel is stuck, with glass frit or the like, to a rear panel made of, for example, a metal plate to form a vacuum vessel.

In such image display apparatus, an electron beam is emitted by an electron gun unit comprising a group of electron-beam-controlling electrodes with a matrix array, and irradiates a phosphor provided on the inner surface of the image displaying portion of the glass front-panel to display an image. To impress the voltage of an electric source to the electron gun unit, a line connecting the electron gun unit to an external terminal is provided. The line passes, for example, through a joint portion, that is, the glass frit lying between the glass front-panel and the rear panel.

However, during the image displaying, a high voltage of several kV or more is generated between the image displaying portion of the glass front-panel and the external terminal connected to the line passing through the glass frit, which lies between the front Danel and the rear panel, so that an electric charge accumulated on the surface of the front glass panel is abruptly released through the bonding layer of glass frit, and this phenomenon gives rise to a crack on the surface of the bonding layer or of the front panel.

### OBJECT AND SUMMARY OF THE INVENTION

Accordingly, the present invention can provide a glass front-panel for a cathode ray tube, which is available for an image displaying apparatus, wherein damages due to dielectric breakdown are not caused, during image displaying, in a surface of the glass front-panel or in a glass frit or the like, with which the glass front-panel and a rear panel are stuck together, no deterioration in color is undergone if the glass front-panel is exposed to an electron beam, and the mechanical strength of the glass front-panel is excellent.

This invention can also provide a production method of the glass front-panel described above.

In accordance with one aspect of this invention as set out in claim 1, there is defined a glass front-panel for a cathode ray tube comprising; an image displaying portion, a side wall portion contiguous the image displaying portion, and a flange portion contiguous the side wall portion, the image displaying and side wall portions having a surface layer containing more potassium ions than the interior thereof so as to be resistive to coloring action by an electron beam, as a result of the surface layer undergoing an ion exchanging treatment in molten salt containing potassium ions;

wherein the potassium ion containing surface layer of the flange portion thereof has been substantially removed.

The surface layer resistive to the coloring action of the electron beam according to the present invention may be obtained by means of dipping the glass front-panel, for a predetermined period of time, into a molten salt containing potassium nitrate as a main component, as disclosed in Japanese Laid-open Patent Publication Nos. 62-153148 and 1203244 or GB-A-2 200 627 for example. As a result of the foregoing, an exchange is made between sodium ions in the surface layer and potassium ions in the molten salt. In this connection, a mol ratio of K₂O/(K₂O + Na₂O) may be 0.2 or more, preferably, 0.3 to 0.6, concerning the alkaline ions in the surface layer.

Thus, at least the image displaying portion of the glass front-panel will have the surface layer containing more potassium ions than those in the interior thereof to a depth of about 15 µm, so that the surface layer is not easily blackened if irradiated by the electron beam. Further, compressive stresses are produced in the surface layer, so that the mechanical strength of the glass front-panel can be improved.

According to the present invention, the flange portion of the glass front-panel has a surface layer which contains substantially no more potassium ions than

the interior thereof. The potassium-rich surface layer may be present on the whole glass front-panel except for the flange portion, or only on the image displaying portion exposed to the electron beam.

If such a surface layer exists on the flange portion, the electric resistivity of the surface layer becomes greater than that of the interior of the flange portion. Hence, an electric charge tends to be imparted on the surface layer during image displaying and a dielectric breakdown occurs when the electric charge imparted on the surface layer is cleared. Such breakdown occurs more easily when local defects such as foreign substances or projections exist in the surface of the flange portion or in the glass frit. It is therefore preferable to lower the electric resistivity of the surface layer of the flange portion substantially to the same level as that of the interior thereof. When the image is displayed, the temperature of the glass front-panel rises and, hence, the electric insulation resistance of the glass front-panel decreases so much. Accordingly, the above dielectric breakdown at the time of discharging occurs more easily in such a cathode ray tube as to have high brightness.

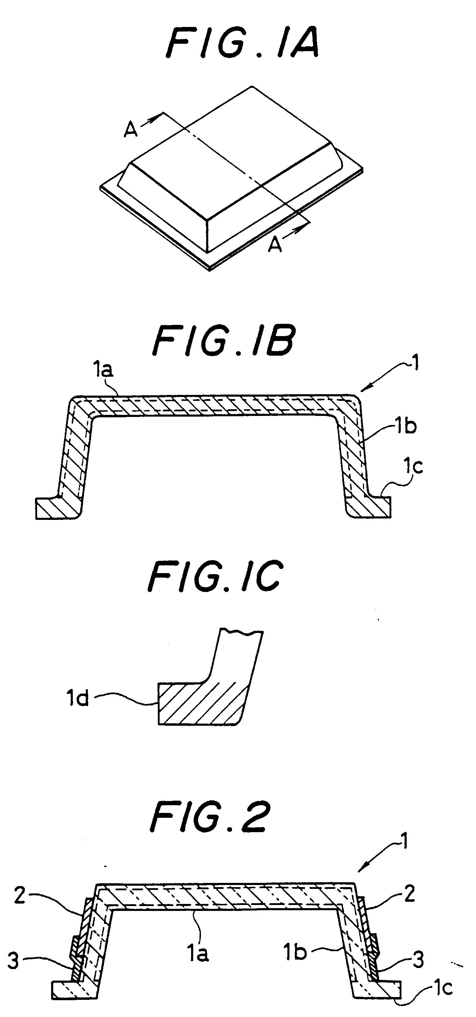

If there is a small projection in a face of the flange portion of the glass front-panel, which is to be joined with the rear panel, or in the end face of the flange portion, which is denoted by character 1d in Fig. 1C, a discharge easily starts from the tip of the projection to cause the dielectric breakdown. Therefore, to prevent the dielectric breakdown at the time of image displaying, it is preferable to suppress the irregularity of the surface below 3 µm to obtain a smooth surface.

If the glass front-panel of this invention is made of glass whose electric resistivity is lower than 10¹⁰ Ω cm at temperature of 150°C, the damages due to dielectric breakdown can be considerably reduced. Such glass is, for example, soda-lime-silica glass manufactured through the float method, or well-known. glass for cathode ray tube, containing BaO or alkaline earth metal oxide. Since the soda-lime-silica glass manufactured through the float method is not expensive, it is preferable from the economical viewpoint.

Moreover, in the production of the glass front-panel of this invention, it is possible to use the existing method, such as press forming, in which a glass plate is heated and formed in a mold of predetermined shape, or direct forming from a glass gob.

Preferably, a belt-like electrode for smoothing a gradient of electric potential is provided at least on one side of the outer periphery and the inner periphery of the side wall portion.

As the material for the electrode for smoothing the gradient of electric potential, semiconductor materials or a mixture of semiconductor material and conductive material can be used. As the semiconductor material, fine powder of silicon carbide, tungsten carbide, a mixture of zinc oxide and bismuth oxide, cupric oxide, or the like may be suitable, and as the conductive material, fine powder of carbon, silver, copper, or the like may be available. It is preferable to mix the semiconductor materials, or to mix the semiconductor material with the conductive material, in order that the electric resistivity of the mixture is adjusted within the range of 10⁵ to 10⁹ Ω cm on its dried condition. The belt-like electrode having such electric resistivity is secured to either or both of the outer and inner surfaces of the side wall portion of the glass front-panel, and thereafter, dried up. The electric resistivity lower than 10⁵ Ω cm is undesirable because electrons emitted by the electron gun unit, which pass through a space near the side wall portion within the vessel and impinge on the phosphor on the image displaying portion, are deflected by an effect of space potential existing in the vicinity of the side wall portion, and thereby, the image produced in a circumferential portion of the image plane is distorted. Further, the electric resistivity higher than 10⁹ Ω cm is also undesirable because it becomes insufficient to make the gradient of electric potential smoother.

If the electric resistivity of the belt-like electrode is kept within the range of 10⁵ to 10⁹ Ω cm, no image distortion is produced, and the cathode ray tube is prevented from being damaged due to local high-voltage discharging.

Moreover, in order to quickly clear of the electric charge on the side wall portion of the front panel, a second belt-like electrode made of a conductor may be secured to the side wall portion near the rear panel and brought into contact with the first belt-like electrode having the electric resistivity of 10⁵ to 10⁹ Ω cm. At that time, to prevent the image distortion, it is preferable to place the boundary between the second belt-like electrode and the first electrode in a position farther from the image displaying portion than the portion, nearest to the image displaying portion, of the electron gun unit.

Setting up the electrode for making the gradient of electric potential smoother in the side wall portion of the front panel is achieved by applying a liquid and drying it up, the liquid being obtained as a result of having 30 to 80% by eight of the previously stated fine powder dispersed in epoxy resin or acrylic resin varnish, or in adhesive binder such as alumina sol and potassium silicate liquid.

As the electrode made of the conductor and provided in the side wall portion, a conductive paint whose electric resistivity is within a range of 10² to 10⁻⁴ Ω cm can be used. A paint obtained by mixing fine powder of silver in an organic or inorganic binder may be used.

In accordance with another aspect of this invention as set out in claim 8, a production method of a glass front-panel is defined which comprises steps of: heating a glass plate to form a glass front-panel having an image displaying portion of a predetermined shape, a side wall portion crookedly contiguous said image displaying portion, and a flange portion crookedly contiguous said sidewall portion; exchanging sodium ions in the whole surface layer of the shaped glass front-panel into potassium ions in a molten salt so as to make the surface layer contain more potassium ions than the interior of the shaped glass front-panel and, thereby, make the surface layer resistive to coloring action of the electron beam; and substantially eliminating only the surface layer potassium ions of the flange portion by means of immersing the flange portion into an etching liquid containing hydrofluoric acid or into an eluent of alkaline ions containing inorganic acid.

For the method of making the whole surface layer of the glass front-panel have more potassium ions than those in the interior thereof, the methods disclosed, for example, in Japanese Laid-open Patent Publication Nos. 62-153148 and 1-203244 are available. In the surface layer of the glass front-panel, the mol ratio K₂O/(K₂O + Na₂O) is set to be 0.2 or more, and preferably, 0.3 to 0.6.

As the etching liquid of acid, including hydrogen fluoride, for dissolving and then removing the surface layer of the flange portion after the whole surface of the glass front-panel is changed to such a layer as to be resistive to the coloring action of the electron beam, a solution obtained by diluting hydrogen fluoride with water can be used. Normally, the concentration of a water solution of hydrogen fluoride is set in a range of 1 to 20%. A solution containing 3 to 10% of hydrogen fluoride, or a solution obtained by adding 5 to 20% of sulfuric acid to the above solution is preferably used in view of speeding up the dissolution and removal of the surface layer, in view of reproducibility of the removed thickness of the surface layer, and in view of the surface smoothness after removing. According to composition of the glass front-panel, the water solution may contain acid such as nitric acid, hydrochloric acid, or the like. As a result of removing most of the surface layer having the high electric resistivity and resistive to the coloring action of the electron beam by the help of the water solution containing hydrogen fluoride, small flaws and projections of the surface produced in the course of the ion exchanging process can be removed. The surface becomes microscopically smooth and hardly produces abnormal discharging. Further, the electric resistivity of the surface of the glass front-panel can be brought to the same level as that in the interior thereof. As for the smoothness of the face where the flange portion is joined to the rear panel and that of the end face of the flange portion, it is desired to be under 3 µm in view of preventing the dielectric breakdown due to discharging.

As the eluent used for eluting alkaline ions included in the surface layer, that is, as the eluent for substantially removing the layer having the high electric resistivity, and reducing the resistivity of the surface layer of the glass front-panel to the same level as that of the interior thereof, a liquid containing an inorganic acid can be used. Particularly, a solution containing sulfuric acid as its main component is preferable because, when it is used, the surface of the flange portion after eluting is smooth, the process can be performed in a short time, and , there is a good reproducibility. The concentration of sulfuric acid is desired to be 30% or more, and nitric acid or hydrochloric acid may be added to the sulfuric acid. Further, the etching liquid and the eluent may be heated up when used.

When the surface layer of the flange portion is removed by mechanical grinding and, then, by the above etching or eluting, it is preferable for the surface roughness of the flange portion to be under R_{MAX} 8 µm after mechanical grinding.

According to the present invention, the surface layer of the glass front-panel containing more potassium ions than those in the interior thereof, and having higher electric resistivity and resistance to the coloring action of the electron beam is formed on the image displaying portion but not substantially formed on the flange portion. Accordingly, at a time of image displaying, the blackening of the image displaying portion due to bombardment of the electron beam can be suppressed. Further, the electric resistivity of the surface of the flange portion is made equal to that in the interior thereof, so that an electric charge is not imparted on the flange portion at the time of image displaying. Thus, small cracks will scarcely initiate in the joint layer, or the surface of the flange portion due to abnormal discharging accompanied by an instantaneous large current.

Moreover, a belt-like electrode provided on the side wall portion of the glass front-panel can control the electric resistivity of the side wall portion, so that no distortion is produced in the displayed image. In addition, the electric charge imparted on the surface of the front panel due to application of high voltage is prevented from being abnormally discharged along the surface of the front panel or the flange portion, as accompanied by an instantaneous large current.

In the method of producing the glass front-panel according to the present invention, the surface layer of the flange portion is dissolved and removed with the water solution of hydrogen fluoride, or from the surface layer of the flange portion, the alkaline ions that cause an increase of the electric resistivity are eluted. Thus, the surface of the flange portion is made smooth and hardly has such small projections as to cause dielectric breakdown at the time of image displaying. At the same time, the difference in the electric resistivity between the surface and the interior of the flange portion is reduced, so that the amount of electric charge imparted on the surface of the flange portion decreases.

The above, and other objects, features and advantages of this invention, will be apparent from the following detailed description of illustrative embodiments thereof to be read in connection with the accompanying drawings, wherein like reference numerals identify the same or corresponding parts in the several views.

### BRIEF DESCRIPTION OF THE DRAWINGS

Fig. 1A is a perspective view of a glass front-panel according to an embodiment of this invention;
Fig. 1B is a sectional view, viewed in a direction of arrows A, of the glass front-panel of Fig. 1A;
Fig. 1C is an enlarged, sectional view of a flange portion of the glass front-panel appearing on Fig. 1B;
Fig. 2 is a sectional view of a glass front-panel according to a second embodiment of this invention;
Fig. 3A is a sectional view of a cathode ray tube, to which the glass front-panel of Fig. 1B is applied;
Fig. 3B is a sectional view of another cathode ray tube, to which the glass front-panel of Fig. 2 is applied;
Fig. 3C is a sectional view of a modified one of the cathode ray tube of Fig. 3B;
Fig. 4A is a graphical representation of a gradient of electric potential at a time of a belt-like electrode for making the gradient of electric potential easier being applied;
Fig. 4B is a graphical representation of a gradient of electric potential at a time of the electrode appearing in Fig. 4A being not applied; and
Fig. 5 is an explanatory view of a device for producing the glass front-panel shown in Fig. 1A to 2.

### DETAILED DESCRIPTION OF PREFERRED EMBODIMENTS

Some glass front-panels embodying the present invention and respective cathode ray tubes to which the glass front-panels are applied will be described in regard to Figs. 1A to 4B. As shown in Fig. 1B, a glass front-panel 1 has a flat image displaying portion 1a, a side wall portion 1b crookedly contiguous to the image displaying portion 1a, and a flange portion 1c crookedly contiguous to the side wall portion. The surface layer, indicated in dotted lines, of the image displaying portion la and side wall portion 1b contains more potassium ions than those in the interior thereof, so as to be resistive to coloring action of an electron beam, and have compressive stresses for improving the mechanical strength of the glass front-panel 1. The flange portion 1c, however, has no such surface layer. The flange portion is indicated by oblique lines in Fig. 1C.

In another embodiment, shown in Fig. 2, of the present invention, a belt-like electrode 2 for smoothing a gradient of electric potential, and another belt-like electrode 3 made of conductive material are provided respectively on one side, near to the image display portion la, of the outer surface of the side wall portion 1b and on the other side, near to the flange portion 1c, of the outer surface of the side wall portion 1b. The two electrodes partly overlap each other.

Figs. 3A to 3C are sectional views of some cathode ray tubes, to which the glass front-panels 1 shown in Figs. 1A to 2 are respectively applied. As shown in Fig. 3A, a phosphor 5 is applied to the inner side of the glass front-panel 1, and covered with an aluminum foil 6, to which an external anode terminal 4 is connected. A rear panel 10 made of metal sheet is stuck to the back of the glass front-panel 1 with a glass frit 9 so as to cover the opening of the glass front-panel 1. The space 11 closed by the glass front-panel 1 and the rear panel 10 is brought to a predetermined degree of vacuum by suction. An external terminal 8 is connected to the electron gun unit 7 through the glass frit 9.

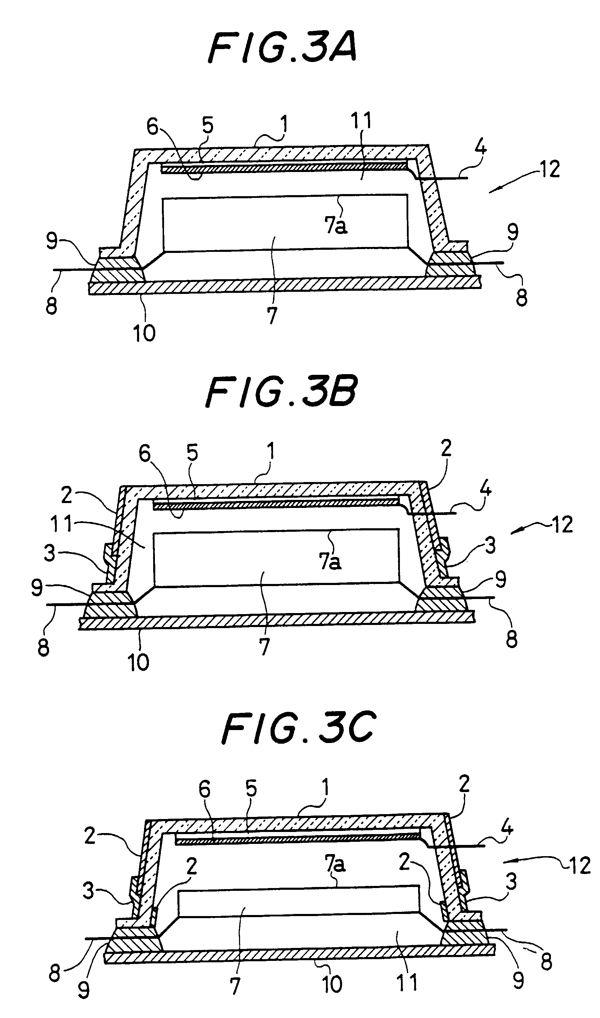

The glass front-panels 1 shown in Figs. 1A - 1C and Fig. 2 substantially correspond to respective glass front-panels applied to the cathode ray tubes 12 shown in Figs. 3A and 3B. A modified one of the glass front-panel shown in Fig. 3B is applied to a cathode ray tube 12 shown in Fig. 3C, in which another electrode 2 for making the gradient of electric potential smoother is provided on the inner surface of the side wall portion 1b.

The glass for the front-panel is treated by ion exchange process in a molten salt containing potassium ions so that the surface layer of the front panel may be resistive to coloring due to electron beam bombardment, and compressive stresses for improving mechanical strength may be produced in the surface layer of the front panel 1.

The function of the cathode ray tube arranged as described above will be briefly described below. The electron gun unit 7 is put in action when a source voltage and television signals are impressed through the external terminal 8. The electron beam emitted by the electron gun unit 7 in response to the television signal is accelerated by a high voltage applied to the aluminum foil 6 through the anode electrode 4. The electron beam then impinges on the phosphor 5 provided on the image displaying portion la of the glass front-panel 1, so as to cause the phosphor 5 to emit light and, thereby, form an image.

As the image is successively displayed in the image displaying portion la, the glass front-panel becomes charged, and in case of the previously proposed glass front-panel, dielectric breakdown often occurs in the flange portion or in the side wall portion of the front panel due to high electric potential.

According to an embodiment of the present invention, since the electric charge is uniformly cleared by the electrode provided on the side wall portion, no instantaneous discharging takes place. Thus, the side wall portion is protected from dielectric breakdown. Further, since the flange portion is strengthened against a dielectric breakdown, damages such as small flaws are not produced in the surface of the flange portion even if an abnormal discharging occurs between the flange portion and the external terminal 8.

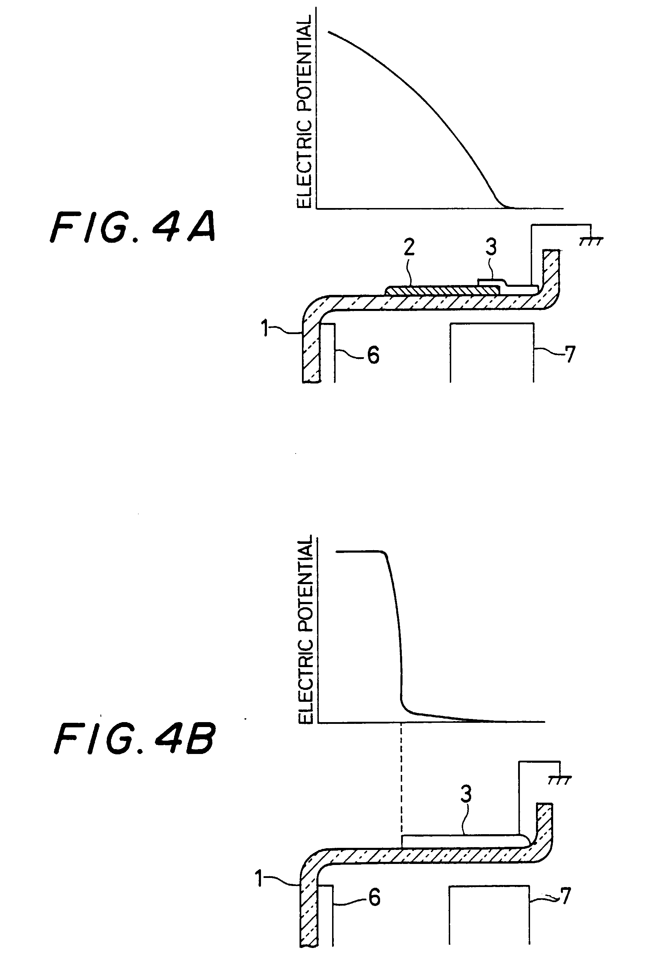

Referring to Figs. 4A and 4B, the function of the electrode 2 for making the gradient of electric potential easier will be described. If the electrode 2 is not provided, as shown in Fig. 4B, a gradient of electric potential along the surface of the side wall portion 1b of the glass front-panel 1 markedly changes in the vicinity of one end of the conductive electrode 3, when electrons, which are emitted by the electron gun unit 7 and thereafter accelerated, impinge on the aluminum foil 6 of the image displaying portion 1a. However, when the electrode 2 is provided as shown in Fig. 4A, the gradient of electric potential along the surface of the side wall portion 1b gently changes, so that no creeping discharge occurs.

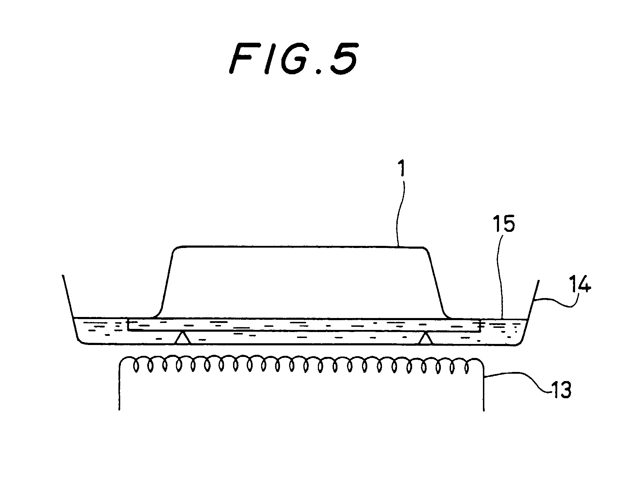

In Fig. 5 illustrating a production method of the glass front-panel of this invention, a solution 15 for etching or eluting is filled into a pan 14 provided with a heater 13, and only the flange portion 1c of the glass front-panel 1 is immersed in the solution 15. Thus, only the surface layer of the flange portion 1c is substantially removed.

### Example 1

A glass plate manufactured by a float method being 5 mm thick and of soda-lime-silica contents as shown in the column Glass A of Table 1 was cut into a predetermined shape. The cut surface of the glass plate was ground with a diamond wheel of roughness #400, so that surface roughness R_{MAX} 7.5 µm was obtained. The glass plate was heated and formed by a known press forming method into a glass front-panel 40 mm deep, the image displaying portion thereof being diagonally 25 cm long, and the joining surface of the flange portion thereof being 15 mm wide. Then, the front panel was immersed in a molten salt of potassium nitrate heated to 460°C for 3 hours and thereafter taken out to be washed in water and dried.

In Table 1 which follows, both Glass A and Glass B have the following property:

Resistivity p at a temperature of 150°C has a value satisfying log p < 11.

**Table 1**

| (Percent by weight) | | |
|---|---|---|
| Components | Glass A | Glass B |
| SiO₂ | 72.79 | 58.80 |
| Al₂O₃ | 1.70 | 1.08 |
| MgO | 3.83 | 0.98 |
| CaO | 7.52 | 2.00 |
| Na₂O | 13.38 | 11.02 |
| K₂O | 0.70 | 2.88 |
| BaO | | 9.72 |
| SrO | | 6.74 |
| Fe₂O₃ | 0.08 | 0.02 |
| CeO₂ | | 0.28 |
| TiO₂ | | 0.46 |
| ZrO₂ | | 5.74 |
| CeO₂ | | 0.28 |
| NiO | | 0.0003 |
| CoO | | 0.0003 |

Then, the flange portion of the glass front-panel provided with resistance to coloring action of an electron beam and an increased mechanical strength was immersed in a 5% water solution of hydrogen fluoride as shown in Fig. 5 to thereby dissolve and remove a thickness of approximately 5 µm from the surface of the glass so that the surface layer containing many potassium ions were removed in substance.

The obtained glass front-panel was stuck to a metal rear-panel with glass frit (tradename "IWF-029B" manufactured by Iwaki Glass Co.) and, thereby, a cathode ray tube as shown in Fig. 3A was fabricated. The cathode ray tube was placed in an atmosphere at 150°C and a voltage of 10 kV was continuously applied to the image displaying portion for 300 hours, but no crack was initiated in the glass front-panel or the glass frit.

### Example 2

A glass plate manufactured by a float method being 5 mm thick and of soda-lime-silica contents as shown in the column Glass A of Table 1 was cut into a predetermined shape. The cut surface of the glass plate was ground with a diamond wheel of roughness #400, so that surface roughness R_{MAX} 7.5 µm was obtained. The glass plate was heated and formed by a known press forming method into a glass front-panel 40 mm deep, the image displaying portion thereof being diagonally 25 cm long, and the joining surface of the flange portion thereof being 15 mm wide. Then, the front panel was immersed in a molten salt of potassium nitrate heated to 460 °C for 3 hours and thereafter taken out to be washed in water and dried.

Then, the flange portion of the glass front-panel provided with resistance to coloring action of an electron beam and an increased mechanical strength was immersed in a 30% water solution of sulfuric acid as shown in Fig. 5 to thereby elute sodium ions and potassium ions existing to a depth of approximately 4.5 µm from the surface so that the surface layers containing many alkaline ions were removed in substance.

The obtained glass front-panel was stuck to a metal rear-panel with glass frit (tradename IWF-029B" manufactured by Iwaki Glass Co.) and, thereby, a cathode ray tube as shown in Fig. 3A was fabricated. The cathode ray tube was placed in an atmosphere at 120°C and a voltage of 10 kV was continuously applied to the image displaying portion for 500 hours, but no crack was initiated in the glass front-panel or the glass frit.

### Example 3

A glass plate manufactured by a float method being 5 mm thick and with the contents as shown in the column Glass B of Table 1 was cut into a predetermined shape. The cut surface of the glass plate was ground with a diamond wheel of roughness #400, so that surface roughness R_{MAX} 7.5 µm was obtained. The glass plate was heated and formed by a known press forming method into a glass front-panel 40 mm deep, the image displaying portion thereof being diagonally 25 cm long, and the joining surface of the flange portion thereof being 15 mm wide. Then, the front panel was immersed in a molten salt of potassium nitrate heated to 460 °C for 7 hours and thereafter taken out to be washed in water and dried.

Then, the flange portion of the glass front-panel provided with resistance to coloring action of an electron beam and an increased mechanical strength was immersed in a water solution of the mixed acid containing 5% of hydrogen fluoride and 10% of sulfuric acid as shown in Fig. 5 to thereby dissolve and remove a thickness of approximately 8 µm from the surface so that the surface layers containing many potassium ions were removed in substance.

The obtained glass front-panel was stuck to a metal rear-panel with glass frit (tradename "IWF-029B" manufactured by Iwaki Glass Co.) and, thereby, a cathode ray tube as shown in Fig. 3A was fabricated. The cathode ray tube was placed in an atmosphere at 150°C and a voltage of 10 kV was continuously applied to the image displaying portion for 300 hours, but no crack was initiated in the glass front-panel or the glass frit.

### Example 4

A glass plate being 5 mm thick and with the components as shown in the column Glass B of Table 1 was manufactured by a float method. The glass plate was heated and formed by a known press forming method into a glass front-panel 40 mm deep, the image displaying portion thereof being diagonally 25 cm long, and the joining surface of the flange portion thereof being 15 mm wide. Then, in the same manner as that described in Example 1, the front panel was immersed in a molten salt of potassium nitrate heated to 460 °C for 7 hours, and thereafter, the surface layers containing potassium ions were removed.

The obtained glass front-panel was stuck to a metal rear-panel with glass frit (tradename IWF-029B" manufactured by Iwaki Glass Co.) and, thereby, a cathode ray tube as shown in Fig. 3A was fabricated. The cathode ray tube was placed in an atmosphere at 150°C and a voltage of 10 kV was continuously applied to the image displaying portion for 300 hours, but no dielectric breakdown phenomenon was observed and no crack was initiated in the glass front-panel or the glass frit.

### Example 5

A glass plate being 5 mm thick and of soda-lime-silica contents as shown in the column Glass A of Table 1 manufactured by a float method was heated and formed by a known press forming method into a glass front-panel 40 mm deep, the image displaying portion thereof being diagonally 25 cm long, and the joining surface of the flange portion thereof being 15 mm wide. Then, the front panel was immersed in a molten salt of potassium nitrate heated to 460 °C for 3 hours and thereafter taken out to be washed in water and dried.

Then, the flange portion of the glass front-panel provided with resistance to coloring action of an electron beam and an increased mechanical strength was immersed in a 5% water solution of hydrogen fluoride as shown in Fig. 5 to thereby dissolve and remove a thickness of approximately 10 µm from the surface, so that the surface layers containing many potassium ions were removed. The obtained glass front-panel was stuck to a metal rear-panel with glass frit (tradename "IWF-029B" manufactured by Iwaki Glass Co.) and, thereby, a cathode ray tube as shown in Fig. 3A was fabricated. The cathode ray tube was placed in an atmosphere at 150°C and a voltage of 10 kV was continuously applied to the image displaying portion for 300 hours, but no crack was initiated in the glass front-panel or the glass frit.

### Example 6

A glass plate being 5 mm thick and of soda-lime-silica contents as shown in the column Glass A of Table 1 manufactured by a float method was heated and formed by a vacuum forming method with a press process, into a glass front-panel 40 mm deep, the image displaying portion thereof being diagonally 25 cm long, and the joining surface of the flange portion thereof being 15 mm wide. Then, the front panel was immersed in a molten salt of potassium nitrate heated to 460°C for 3 hours and thereafter taken out to be washed in water and dried.

Then, the flange portion of the glass front-panel provided with resistance to coloring action of an electron beam and an increased mechanical strength was immersed in a 5% water solution of hydrogen fluoride as shown in Fig. 5 to thereby dissolve a thickness of approximately 10 µm from the surface of the glass so that the surface layer containing many potassium ions were removed.

Then, a belt-like electrode was formed so as to cover the side wall portion of the obtained glass front-panel by applying a liquid composed of 50% by weight of fine silicon-carbide powder and 50% by weight of alumina sol. The electrode was laid in a band form around the whole side wall portion, from the level approximately 35 mm above the position of the rear panel to the level where the front surface 7a of the electron gun unit is projected on the side wall portion. A conductive electrode was laid in a band form near to the flange portion with a width of approximately 13 mm around the whole side wall portion. The conductive electrode covered a part of the former electrode by approximately 3 mm. The carbon electrode was obtained by means of applying a mixture of fine carbon powder and alumina sol. The cathode ray tube shown in Fig. 3B was fabricated by using the above front panel.

The belt-like electrode of carbon was connected with an external ground terminal and the aluminum foil of the image displaying portion was continuously subjected to a bombardment of the electron beam accelerated by a voltage of 10 kV in a thermostatic chamber at approximately 80°C for 10,000 hours. However, no crack due to abnormal discharging was initiated in any of the side wall portion and flange portion of the front panel and the joint portion.

### Example 7

A cathode ray tube was fabricated in a similar manner to that described in Example 6, except that a belt-like electrode made of a mixture of fine powder of carbon and fine powder titanium, and having approximately 1 x 10⁹ Ω cm of electric resistivity was additionally provided on the inner surface of the side wall portion as shown in Fig. 3C. The cathode ray tube was subjected to a continuous bombardment of the electron beam in the same manner as that described in Example 6 for 10,000 hours. However, no crack due to abnormal discharging was initiated in any of the side wall portion and flange portion of the front panel and the joint portion.

### Example 8

A glass plate being 5 mm thick and of soda-lime-silica contents as shown in the column Glass A of Table 1 manufactured by a float method was heated and formed by a known press forming method into a glass front-panel 40 mm deep, the image displaying portion thereof being diagonally 25 cm long, and the joining surface of the flange portion thereof being 15 mm wide. Then, the front panel was immersed in a molten salt of potassium nitrate heated to 460 °C for 2 hours and thereby, the surface layer having more potassium ions than those in the interior were obtained. The thus obtained front panel whose flange portion was provided with the above described surface layer was stuck to a metal rear-panel with glass frit (tradename "IWF-029B" manufactured by Iwaki Glass Co.) and, thereby, a cathode ray tube as shown in Fig. 3A was fabricated.

Then, a belt-like electrode was formed so as to cover the side wall portion of the obtained glass front-panel by means of applying a liquid composed of 50% by weight of fine silicon-carbide powder and 50% by weight of alumina sol. The electrode was laid in a band form around the whole side wall portion, from the level approximately 35 mm above the position of the rear panel to the level where the front surface 7a of the electron gun unit is projected on the side wall portion. A conductive electrode was laid in a band form near to the flange portion with a width of approximately 13 mm around the whole side wall portion. The conductive electrode covered a part of the former electrode by approximately 3 mm. The carbon electrode was obtained by means of applying a mixture of fine carbon powder and alumina sol. The cathode ray tube shown in Fig. 3B was fabricated by using the above front panel.

The belt-like electrode of carbon was connected with an external ground terminal and the aluminum foil of the image displaying portion was continuously subjected to a bombardment of the electron beam accelerated by a voltage of 10 kV in a thermostatic chamber at approximately 80°C for 10,000 hours, However, no crack due to abnormal discharging was initiated in any of the side wall portion and flange portion of the front panel and the joint portion.

### Reference Example 1

A glass plate being 5 mm thick and of soda-lime-silica contents as shown in the column Glass A of Table 1 manufactured by a float method was heated and formed by a known press forming method into a glass front-panel 40 mm deep, the image displaying portion thereof being diagonally 25 cm long, and the joining surface of the flange portion thereof being 15 mm wide. Then, the front panel was immersed in a molten salt of potassium nitrate heated to 460 °C for 2 hours and, thereby, the surface layers having more potassium ions than those in the interior were obtained. The thus obtained front panel whose flange portion was provided with the above described surface layer was stuck to a metal rear-panel with glass frit (tradename "IWF-029B" manufactured by Iwaki Glass Co.) and, thereby, a cathode ray tube as shown in Fig. 3A was fabricated.

When the cathode ray tube was placed in an atmosphere at 150°C and a voltage of 10 kV was continuously applied to the image displaying portion for 100 hours, a large number of traces of abnormal discharging were observed on the joined surface of the flange portion and a large number of small cracks were produced on the glass frit. Further, lead oxide, a constituent of the frit glass, was observed to have been reduced and acted as the source wherefrom the dielectric breakdown started.

### Reference Example 2

A glass front-panel was fabricated using a glass plate with the components as shown in the column Glass B of Table 1 in a similar manner to that described in Example 4 and, thereby, a glass front-panel having surface layers containing more potassium ions than those in the interior were formed on the whole glass surface was obtained. Using this front panel, a cathode ray tube as shown in Fig. 3A was fabricated. When the cathode ray tube was placed in an atmosphere at 150°C and a voltage of 10 kV was continuously applied to the image displaying portion for 100 hours, a large number of traces of abnormal discharging were observed on the joined surface of the flange portion and a large number of small cracks were initiated in the glass frit. Further, lead oxide, a constituent of the frit glass, was observed to have been reduced and acted as the source wherefrom the dielectric breakdown started.

According to the present invention, at least the following effects will be expected.
(1) It does not occur that the image displaying portion of the glass front-panel reduces its luminance and blackens under the influence of coloring action of the electron beam for displaying the image on the image displaying portion, and if electricity charged on the surface of the glass front-panel suddenly discharges, damages to the glass front-panel are not caused, so that a stable image with high luminance is always obtained.
(2) It is possible to manufacture a glass front-panel not expensive, not influenced by the coloring action of the electron beam, and not causing an abnormal discharge, though a glass material, which is composed of soda-lime-silica and able to be massproduced, or which does not contain a large amount of expensive potassium as a raw material, is used. Further, to prevent the abnormal discharge, it is easy to substantially remove the surface layer of the flange portion of the glass front-panel, and after the removal, the surface of the flange portion is very smooth.

## Claims

1. A glass front-panel (1) for a cathode ray tube (12) comprising an image displaying portion (1a), a side wall portion (1b) contiguous the image displaying portion, and a flange portion (1c) contiguous the side wall portion, the image displaying and side wall portions having a surface layer containing more potassium ions than the interior thereof so as to be resistive to coloring action by an electron beam as a result of the surface layer undergoing an ion exchanging treatment in molten salt containing potassium ions, characterised by the flange portion having had such a potassium ion containing surface layer substantially removed.

2. A glass front-panel according to claim 1, wherein said surface layer of the flange portion has been substantially removed by mechanical grinding and/or chemical etching, to a depth of at least 4µm.

3. A glass front-panel according to claim 1, wherein said surface layer of the flange portion has been substantially removed by selectively eluting alkaline ions to a depth of at least 4µm from the surface.

4. A glass front-panel according to claim 1, 2 or 3 wherein a belt-like electrode (2) for smoothing the gradient of electric potential on the surface of the periphery of the glass front-panel is provided at least on one side of the outer periphery or the inner periphery of said side wall portion.

5. A glass front-panel according to claim 4, wherein said belt-like electrode has an electrical resistivity of 10⁵ to 10⁹ Ω cm, and a second conductive electrode (3) is provided on the surface, near said flange portion, of said side wall portion so as to be brought into contact with said belt-like electrode.

6. A glass front-panel according to any of claims 1 to 5, wherein said glass front-panel is made of a base glass material whose resistivity p at 150°C has a value satisfying log p ≤ 11.

7. A glass front-panel according to any preceding claim which further includes phosphor means (5) for emitting light when exposed to an electron beam and which is disposed on the inside of the image displaying portion.

8. A production method of a glass front-panel (1) having resistance to coloring action by an electron beam comprising the steps of :
heating a glass plate to form a glass front-panel having an image displaying portion (1a) of a predetermined shape, a side wall portion (1b) crookedly contiguous said image displaying portion, and a flange portion (1c) crookedly contiguous said side wall portion;
exchanging sodium ions in the whole surface layer of said shaped glass front-panel with potassium ions in a molten salt so as to make said surface layer contain more potassium than the interior of said shaped glass front-panel and thereby make said surface layer resistive to coloring action by an electron beam; and characterised by
substantially eliminating only the surface layer potassium ions of said flange portion by means of immersing said flange portion into an etching liquid (15) containing hydrofluoric acid or into an eluent (15) of alkaline ions containing inorganic acid.

9. A cathode ray tube (12) which comprises a glass front panel according to any one of claims 1 to 6 or a glass front-panel produced according to the method of claim 8 and which further includes an electron gun unit (7) for emitting an electron beam under reduced pressure in response to an input video signal, phosphor means (5) on the inside of the image displaying portion for emitting light when exposed to an electron beam from the electron gun unit, a rear panel (10) attached to the glass front-panel forming a vessel accommodating the electron gun unit, and an external terminal (8) electrically connected to the electron gun unit.

## Patentansprüche

1. Glasfrontplatte (1) für eine Kathodenstrahlröhre (12) mit einem Bildanzeigeabschnitt (la), einem Seitenwandabschnitt (1b), der an dem Bildanzeigeabschnitt (1a) angrenzt und einem Flanschabschnitt (1c), der an den Seitenwandabschnitt angrenzt, wobei Bildanzeige- und Seitenwandabschnitt eine Oberflächenschicht aufweisen, die mehr Kaliumionen enthält als ihr Inneres, um gegen eine Farbeinwirkung durch einen Elektronenstahl als Ergebnis einer Ionentauschbehandlung der Oberflächenschicht in einem geschmolzenen Salz, das Kaliumionen enthält, wiederstandsfähig zu sein, dadurch **gekennzeichnet**, daß die Kaliumionen enthaltende Oberflächenschicht an dem Flanschabschnitt im wesentlichen entfernt worden ist.

2. Glasfrontplatte nach Anspruch 1, bei der die Oberflächenschicht des Flanschabschnitts im wesentlichen durch mechanisches Schleifen und/oder chemisches Ätzen bis zu einer Tiefe von wenigstens 4 µm entfernt wurde.

3. Glasfrontplatte nach Anspruch 1, bei der die Oberflächenschicht des Flanschabschnitts im wesentlichen durch eine selektive Elution von Alkaliionen bis zu einer Tiefe von wenigstens 4 µm aus der Oberfläche entfernt ist.

4. Glasfrontplatte nach einem der Ansprüche 1 bis 3, bei der eine gürtelähnliche Elektrode (2) zur Glättung des Gradienten des elektrischen Potentials auf der Oberfläche des Randbereichs der Glasfrontplatte wenigstens an einer Seite des Außenumfangs oder des Innenumfangs des Seitenwandabschnitts vorgesehen ist.

5. Glasfrontplatte nach Anspruch 4, bei der die gürtelähnliche Elektrode einen elektrischen spezifischen Widerstand von 10⁵ bis 10⁹ Ohm cm aufweist und eine zweite leitfähige Elektrode (3) an der Oberfläche des Seitenwandabschnitts in der Nähe des Flanschabschnitts so vorgesehen ist, daß sie mit der gürtelähnlichen Elektrode in Kontakt gebracht ist.

6. Glasfrontplatte nach einem der Ansprüche 1 bis 5, bei der Glasfrontplatte aus einem Basis-Glasmaterial gefertigt ist, dessen spezifischer Widerstand p bei 150°C einen Wert aufweist, der die Bedingung log p ≤ 11 erfüllt.

7. Glasfrontplatte nach einem der vorhergehenden Ansprüche, die weiterhin eine phosphorezierende Einrichtung (5) aufweist, um Licht auszustrahlen, wenn ein Elektronenstrahl auf sie eintrifft, und die an der Innenseite des Bildanzeigeabschnitts vorgesehen ist.

8. Herstellungsverfahren und eine Glasfrontplatte (1), die gegen eine Farbeinwirkung durch einen Elektronenstrahl wiederstandsfähig ist, aufweisend die folgenden Schritte: Erhitzen eine Glasplatte zur Bildung einer Glasfrontplatte mit einem Bildanzeigeschnitt (1a) einer vorbestimmten Form, einem Seitenwandabschnitt (1b), der schräg an dem Bildanzeigeabschnitt angrenzt, und einem Flanschabschnitt (1c'), der schräg an den Seitenwandabschnitt (1b) angrenzt,
Austauschen von Natriumionen in der gesamten Oberflächenschicht der geformten Glasfrontplatte mit Natriumionen in einem geschmolzenen Salz, so daß die Oberflächenschicht mehr Kaliumionen als das Innere der geformten Glasfrontplatte aufweist, um somit die Oberflächenschicht widerstandsfähig gegenüber einer Farbeinwirkung durch einen Elektronenstrahl zu machen,
**gekennzeichnet** durch
im wesentlichen Beseitigen nur der Oberflächenschicht-Kaliumionen des Flanschabschnitts durch Eintauchen des Flanschabschnitts in eine Ätzlösung (15), die Fluorwasserstoffsäure enthält, oder in ein Extraktionsmittel (15) aus alkalischen Ionen, die anorganische Säure enthalten.

9. Kathodenstrahlröhre (12), die eine Glasfrontplatte nach einem der Ansprüche 1 bis 6 oder eine Glasfrontplatte enthalten, die gemäß dem Verfahren nach Anspruch 8 hergestellt wurde, und die weiterhin aufweist,
eine Elektronenkanoneneinheit (7) zum Ausstrahlen eines Elektronenstrahls unter verringertem Druck abhängig von einem Eingangsvideosignal,
eine phosphoreszierende Einrichtung (5) auf der Innenseite des Bildanzeigeschnitts zum Austrahlen von Licht, wenn ein Elektronenstrahl von der Elektronenkanoneneinheit auftrifft,
eine Rückwand (10), die an die Glasfrontplatte zur Bildung eines Behälters angebracht ist, der die Elektronenkanoneneinheit aufnimmt, und
einen externen Anschluß (8), der elektrisch mit der Elektronenkanoneneinheit verbunden ist.

## Revendications

1. Panneau frontal en verre (1) pour un tube à rayons cathodiques (12) comportant une partie de visualisation d'image (1a), une partie de paroi latérale (1b) adjacente à la partie de visualisation d'image, et une partie de bord (1c) adjacente à la partie de paroi latérale, les parties de visualisation d'image et de paroi latérale ayant une couche superficielle contenant davantage d'ions potassium que l'intérieur de celle-ci de manière à résister à une action de coloration par un faisceau d'électrons en résultat de l'application à la couche superficielle d'un traitement d'échange d'ions dans un bain de sel fondu contenant des ions potassium, caractérisé en ce que la couche superficielle contenant des ions potassium de la partie de bord a été pratiquement éliminée.

2. Panneau frontal en verre selon la revendication 1, dans lequel ladite couche superficielle de la partie de bord a été pratiquement éliminée par meulage mécanique et/ou décapage chimique, à une profondeur de moins de 4 µm.

3. Panneau frontal de verre selon la revendication 1, dans lequel ladite couche superficielle de la partie de bord a été sensiblement éliminée par élution sélective d'ions alcalins à une profondeur d'au moins 4 µm de la surface.

4. Panneau frontal de verre selon la revendication 1, 2 ou 3, dans lequel une électrode sous forme de bande (2) pour lisser le gradient de potentiel électrique sur la surface de la périphérie du panneau frontal de verre est prévue au moins sur un côté de la périphérie extérieure ou de la périphérie intérieure de ladite partie de paroi latérale.

5. Panneau frontal en verre selon la revendication 4, dans lequel ladite électrode sous forme de bande présente une résistivité électrique de 10⁵ à 10⁹ Ω cm, et une seconde électrode conductrice (3) est prévue sur la surface, près de ladite partie de bord, de ladite partie de paroi latérale, de manière à être amenée en contact avec ladite électrode sous forme de bande.

6. Panneau frontal en verre selon l'une quelconque des revendications 1 à 5, dans lequel ledit panneau frontal en verre est réalisé en un matériau à base de verre dont la résistivité ρ à 150°C présente une valeur satisfaisant à l'expression log ρ ≤ 11.

7. Panneau frontal en verre selon l'une quelconque des revendications précédentes, comprenant en outre des moyens luminophores (5) pour émettre une lumière lorsqu'ils sont exposé à un faisceau d'électrons et qui sont disposés sur l'intérieur de la partie de visualisation d'image.

8. Procédé de fabrication d'un panneau frontal en verre (1), présentant une résistance à l'action de coloration par un faisceau d'électrons comportant les étapes consistant à :
chauffer une plaque de verre pour former un panneau frontal en verre ayant une partie de visualisation d'image (1a) de forme prédéterminée, une partie de paroi latérale (16) adjacente de façon tortueuse à ladite partie de visualisation d'image, et une partie de bord (1c) adjacente de façon tortueuse à ladite partie de paroi latérale;
échanger des ions sodium dans toute la couche superficielle dudit panneau frontal en verre façon avec des ions potassium dans un bain de sel fondu de manière à obtenir que ladite couche superficielle contienne davantage de potassium que l'intérieur dudit panneau frontal en verre façonné et rendre ainsi la couche superficielle résistante à une action de coloration d'un faisceau d'électrons; et caractérisé par l'étape consistant à
éliminer pratiquement uniquement les ions potassium de la couche superficielle de ladite partie de bord en plongeant ladite partie de bord dans un liquide de décapage (15) contenant de l'acide fluorhydrique ou dans un éluent (15) d'ions alcalins contenant un acide inorganique.

9. Tube à rayons cathodiques (12) comportant un panneau frontal en verre selon l'une quelconque des revendications 1 à 6 ou un panneau frontal en verre fabriqué selon le procédé de la revendication 8 et qui comprend en outre un canon à électrons (7) afin d'émettre un faisceau d'électrons sous pression réduite en réponse à un signal vidéo d'entrée, des moyens luminophores (5) sur l'intérieur de la partie de visualisation d'image afin d'émettre une lumière lorsqu'ils sont soumis à un faisceau d'électrons provenant du canon à électrons, un panneau postérieur (10) fixé au panneau frontal en verre formant une enceinte recevant le canon à électrons, et une borne extérieure (8) reliée électriquement au canon à électrons.
